Europäisches Patentamt

European Patent Office

Office européen des brevets

(11) Publication number: **0 148 994**
**B1**

(12) **EUROPEAN PATENT SPECIFICATION**

(45) Date of publication of patent specification: **31.05.89**

(51) Int. Cl.⁴: **G 01 B 5/00**

(21) Application number: **84110277.5**

(22) Date of filing: **29.08.84**

(54) Device and method of hair damage assessment.

(30) Priority: **02.09.83 US 528918**
**02.09.83 US 528919**

(43) Date of publication of application:
**24.07.85 Bulletin 85/30**

(45) Publication of the grant of the patent:
**31.05.89 Bulletin 89/22**

(84) Designated Contracting States:
**AT BE CH DE FR GB IT LI LU NL SE**

(56) References cited:
**DE-B-2 521 481**
**DE-C- 571 678**
**DE-C- 625 449**
**US-A-4 236 277**

(73) Proprietor: **Revlon, Inc.**
**767 Fifth Avenue**
**New York, N.Y. 10022 (US)**

(72) Inventor: **Kabacoff, Bernard K.**
**12, Ledgewood Drive**
**Norwalk Connecticut (US)**
Inventor: **Markrow, Fred**
**2050 Seward Avenue**
**Bronx New York (US)**
Inventor: **Govil, Alok K.**
**26 Overhill Drive**
**Marlboro New Jersey (US)**

(74) Representative: **Körber, Wolfhart, Dr. et al**
**Patentanwälte Dipl.-Ing. H. Mitscherlich Dipl.-**
**Ing. K. Gunschmann Dr.rer.nat. W. Körber**
**Dipl.Ing. J. Schmidt-Evers Dipl.-Ing. W. Melzer**
**Steinsdorfstrasse 10**
**D-8000 München 22 (DE)**

The file contains technical information
submitted after the application was filed and
not included in this specification

Courier Press, Leamington Spa, England.

**Description**

This invention relates to an apparatus for measuring the approximate volume of a sample of fibrous material of a predetermined length, to a method of measuring the approximate volume of a sample of fibrous material of predetermined length and to a method of measuring hair damage of a sample of hair of a predetermined length with active negative sites on hair, and more particularly to a method of quantifying human hair damage caused by hair treatment compositions applied thereto and damage caused to human hair by the environment.

Hair care is one of the most important parts of beauty care, and a large variety of hair treatment products are used for providing such care in the form of pre-shampoo conditioners, shampoos, after-shampoo conditioners, rinses, setting lotions, sprays, dyes, bleaches, permanent wave agents and the like. These products in addition to providing the desired result in the hair, such as luster, curl, combability, softness, color and an overall appealing look, also do damage to the hair, especially when used indiscriminately without professional guidance. Damage to hair may also result from other sources, such a combing, humidity, dryness, dirt, sunrays, such as u.v. and infrared radiation, and pollution in the atmosphere. However, damage to hair occurs mostly in the form of physical and chemical changes in hair as a result of bleaching, oxidative dyeing, hair relaxing via alkaline relaxers and reducing waving and curling preparation.

Assessment of hair damage is desirable, so that corrective action may be taken. Such corrective action may be: the utilization of products which do not cause damage or whose damaging effect is minimal; eliminating the use of deleterious products; using products in proper sequence to circumvent further damage; or using products designed to repair hair damage.

Measurement of hair damage is known in the prior art. For example, W. W. Edman and M. E. Marti, *Journal of the Society of Cosmetic Chemists,* pp: 133—145, Sept. 1960, report a study on properties of peroxide-bleached hair and use as a measure of hair damage the so-called 20% index, which is the ratio of work required to stretch the fiber 20 percent after treatment with a peroxide bleach to the work required to stretch the fiber 20% before treatment. To measure the 20% index a constant Elongation Tester is used. The same study also shows measurement of hair damage by "extension-at-break" using a Scott Tester.

Measurement of hair damage via copper absorption is also known. US—A—4 263 277 discloses a method for measuring hair damage by soaking a known weight of hair sample in a 0.1 N tetramine copper sulfate, followed by washing with water. The filtrate is then titrated against 0.1 N sodium thiosulfate to determine the amount of copper absorbed by the hair. The damage to hair is assumed to correlate with the amount of copper absorbed by the hair sample. On account of the proven instability, said tetramine copper sulfate solution is not suited for use in every-day life and is only appropriate for investigational or research purposes. Said tetramine copper sulfate solution must be prepared freshly, immediately prior to use. Even when freshly prepared, its shelf life is extremely short. For practical purposes, a solution that contains $Cu^{++}$ ions must be stable for extended time periods. It must have at least several months and practically several years of shelf life. No other solution or complexing agent is suggested by said reference. The use of a sealed vial and heating of the solution is not suggested by the US—A—4 263 277, either.

Besides these circumstances which are an obstacle to the use by hair professionals or home use, the weighing of a hair sample can be accomplished in research environment by the use of an analytical balance. However, in hairdressing salons or at home the weighing of light materials, such as hair, cannot be done.

According to the present invention, the afore-described difficulties and disadvantages shall be avoided. For solving the problem, an apparatus is proposed which makes it possible to measure the volume of a sample of a fibrous material of predetermined length. It is characterized by a) a multi-sided male member (12) one of said sides having an elongated rectangular projection (14) extending therefrom, a measuring slot (28) on the same side as said projection (14) and extending parallel and in spaced relationship with said projection (14), b) a multi-sided female member (16), one of said sides having an elongated rectangular sample slot (18) of a known width and of the same known length as the rectangular projection (14) for holding said sample (20) of fibrous material and for engaging said rectangular projection (14), so that upon measuring the volume of said sample (20) of fibrous material, said sample slot (18) and projection (14) are flush against each other in a mateable engagement while the side of said male member (12) having the rectangular projection (14) thereon and the side of said female member (16) having the rectangular sample slot (18) therein face each other in a superimposed spaced relationship, wherein the predetermined length of said sample (20) of fibrous material corresponds to the length of said sample slot (18), c) and a measuring means to measure the gap between the bottom of said measuring slot (28) and the corresponding surface of said male member (12) to thereby calculate the sample volume.

DE—C—625 449 discloses a device for measuring the cross-section of a continuous fiber. The fiber or yarn continuously passes a "feeler nozzle" formed by a fork displaceable on a web. Accordingly, only one dimension of the sample (the thickness) is measured, and therefore said device lacks the requirements in order to establish a volumetric measurement. Said reference neither shows nor suggests any means or apparatus for measuring the distance between juxtaposed male and female members including a special measuring slot. Furthermore, said device does not allow to cut hair samples into pieces of a fixed length.

Another subject matter of the invention is a method for measuring the volume of a sample of fibrous material of a predetermined length; comprising placing a sample of hair into a sample receiving slot having predetermined dimensions of length and width; compressing said sample; measuring the height of said sample; cutting of both ends of said sample to obtain a length which corresponds with the length of the measuring slot; and determining the volume of the sample from the known dimensions of length, width and height thereof. Finally, the invention teaches a method of measuring hair damage of a sample of hair of a predetermined length based on copper reaction with active negative sites on hair comprising the steps of: placing a known amount of hair, the weight thereof determined by volumetric analysis, into a sealed vial containing a copper solution of known concentration; reacting said copper solution with said hair; and determining the copper uptake by the hair.

In accordance with the present invention, the copper uptake by the hair and the consequent hair damage can be assessed by a simple, inexpensive method based on measuring the intensity of color of a copper complex solution subsequent to the reaction of the copper complex with a known amount of hair. After the reaction, the color intensity of the copper complex solution is compared with color intensities of known copper concentrations.

The weight of a hair sample is obtained by measuring the volume of the hair sample using the hair volume measuring device of the present invention and converting the volume so obtained to weight by the use of a mathematical equation or a table calculated therefrom.

The hair volume measuring device is indicated in detail in the main claim.

Male and female members of the device are forced against each other compressing the hair sample placed in the sample slot. The width and length of the sample slot are known, and consequently the same dimensions of the sample are also known, while the height of the sample is obtained via measuring the distance between the surfaces of the male and female members of the device.

It also provides a significant advantage for the invention in allowing the user to measure quickly and easily the volume of a sample of fibrous material with a readily available gauge. There is no showing or suggestion that measuring slots for hair volumetric measuring devices are known. There is also no art of record showing that taper gauges or feeler gauges have been used to measure the height of a volume of hair.

Damage to hair caused by bleaching, oxidative dyeing, alkaline hair relaxers, reducing waving and curling preparations and the like results in the creation of negatively charged groups in the hair fiber. These groups readily react with the copper reagent. Thus measurement of the amount of copper reacted with a known amount of hair is used to estimate the extent of hair damage.

It provides an advantage for the invention in using a copper sulfate solution which is stabilized with the complexing agent ethanolamine and buffered with sodium tetraborate having a specific pH range. Therefore the inventive solution, which carries $Cu^{++}$ ions, is stable for extended time periods and is advantageous for use in the field in question.

Figure 1 is a perspective view of one embodiment of the hair volume measuring device of the present invention and includes a hair sample.

Figure 2 is an end view of the device of Figure 1.

Figure 3 is a cross-sectional view of Figure 2 taken along lines 3—3.

Figure 4 is the same cross sectional view as that shown in Figure 3, but showing additionally the cutting off that portion of the hair sample which extends out from the device.

Figure 5 is a perspective view of the hair sample cut in Figure 4.

Figure 6 is a perspective view of another embodiment of the hair volume measuring device of the present invention having a measuring slot therein.

Figure 7 is a cross sectional view of Figure 6 along the line 4—4 and also showing a taper gauge inserted into the measuring slot.

Figure 8 is a perspective view of a further embodiment of the hair volume measuring device of the present invention having rods for insertion into corresponding holes.

Figure 9 is a perspective view of still another embodiment of the hair volume measuring device of the present invention having, in addition to rods and corresponding holes, a measuring slot therein.

The hair volume measuring device 10 of the present invention, by and large, is of a cube-shaped configuration comprising male and female members. It is made of metal, metal alloys or hard material such as plastic, porcelain, wood and glass by molding, casting and machining to desired precision using conventional technique of fabrication.

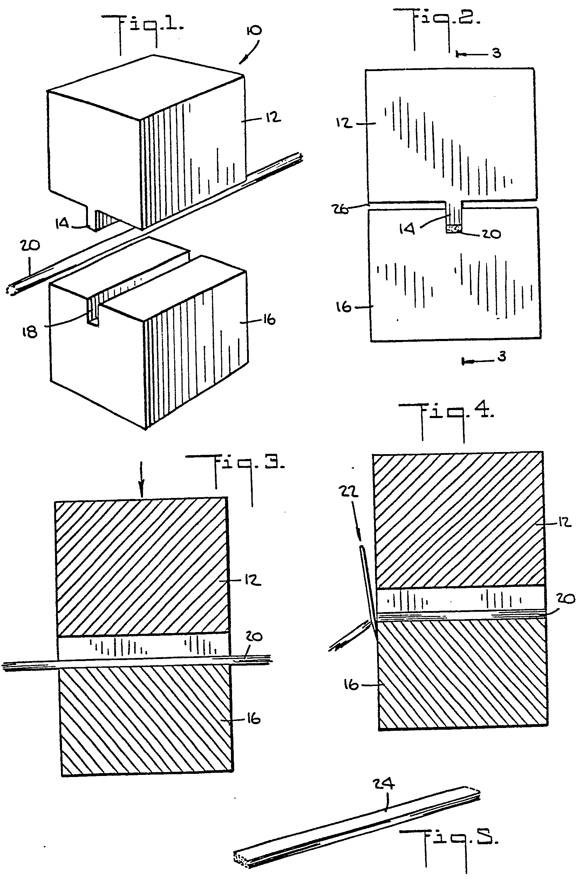

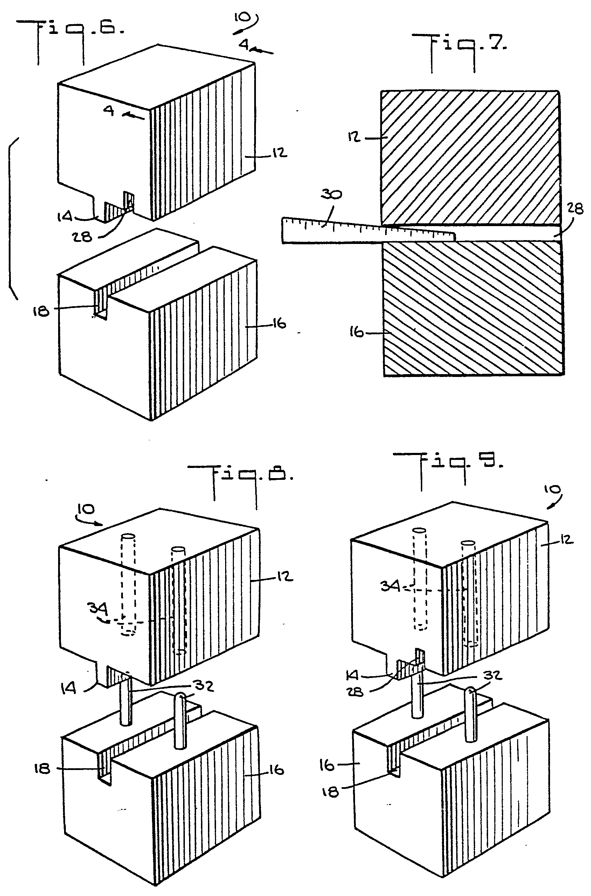

As can be seen in Figures 1 and 2, the hair volume measuring device 10 comprises: male members 12 having projection 14 extending therefrom; and female members 16 having a sample slot 18 to receive and hold hair sample 20 and to engage projection 14. The width of the generally rectangular shape projection 14 is slightly smaller than the width of the generally rectangular shape sample slot 18 for proper mating engagement of the same. In use, hair sample 20 having a length longer than the length of sample slot 18, is placed into sample slot 18. Male member 12 is placed on female member 16 so that projection 14 engages sample slot 18 in a mating relationship exerting force on hair sample 20 and compressing the sample to assume a generally rectangular configuration as can best be seen in Figure 2. Portions of the hair sample on both sides of the device extend outward as shown in Figure 3. To obtain the proper volume of the sample, defined by the space the sample occupies in sample slot 18, the portions of the hair sample projecting outward on both sides of the device are cut with a sharp instrument 22, such as a razor blade, as shown in Figure 4. Subsequent to cutting, the hair sample 20 assumes the configuration 24 shown in Figure 5. The length and width of this configuration is known from the predetermined dimensions of the sample slot, while the height of the same is measured by measuring the gap 26, shown in Figure 2, between the surfaces of male member 12 and female member 16 of the device.

Figures 6 and 7 show another embodiment of the hair volume measuring device of the present invention wherein like numbers denote like members and parts of the device shown in Figures 1—5. Figure 6 is a perspective view of the embodiment in which, additionally, a measuring slot 28 is provided for measuring the height of a hair sample placed in sample slot 18 as previously described. Measuring device 30, such as a taper gauge, is inserted into measuring slot 28, as shown in Figure 7, and the number on the measuring device that corresponds with the height of the sample is read.

Figure 8 is a perspective view of a further embodiment of the present invention wherein like numbers denote like members and parts of the embodiments shown in Figures 1—7. The device of Figure 8 is substantially the same as the device of Figures 1—5, however, it additionally contains a pair of rods 32 in female member 16 and corresponding receiving members or holes 34 in male member 12 for engagement thereof. Upon use for volume measurement rods 32 are inserted into corresponding receiving members on holes 34 and male member 12 is pressed against female member 16. The engagement of said rods with said holes help to maintain parallel alignment of the respective surfaces of the male and female members of the device.

Figure 9 is a perspective view of still another embodiment of the hair volume measuring device of the present invention wherein like members denote like members and parts of the embodiments shown in Figure 1—8. The device of Figure 9 is substantially the same as the device of Figure 8, however, it additionally contains measuring slot 28 the function of which was previously explained in the description of Figures 6 and 7.

Measurement of hair volume is accomplished by placing a small sample of hair, having a length of at least as long as the length of the device, in the sample slot of the female member of the device and compressing the sample with the projection of the male member of the device. If sufficient hair has been placed in the sample slot, there will be a gap between the superimposed surfaces of the male and female members of the device. The distance between the surfaces, which is a measure of the thickness or height of the hair sample in the sample slot, is measured by a gauge such as an automotive feeler or taper gauge capable of measuring thickness in thousands of an inch. The gauge is inserted in the gap between the surfaces or in the measuring slot of the device especially provided for measuring purposes. Once the gauge reading has been recorded, the hair protruding from both sides of the sample slot is readily cut with a razor blade. The gauge reading is then used to determine the actual hair weight via the relationship of the least square line of best fit.

Once the weight of the hair sample has been determined, the sample is placed into a suitable container such as an optically clear vial containing a copper solution of known or previously measured color intensity. It is preferred that copper solution display storage stability thus eliminating the need for continual resupply of fresh solution.

In one embodiment the capped vial containing the hair sample and the copper solution is shaken and heated to facilitate the reaction between the copper reagent and the negatively charged groups in the hair.

The solution is decanted and amount of copper remaining is determined. Since a relationship exists between the amount of hair damage and the amount of copper removed from the initial incubation solution; that amount can be determined by simple substraction of the amount of copper after incubation with the hair sample from that value for the amount of copper in the solution before incubation.

The copper in the solution may be conveniently determined by measurement of color intensity or impedance as described hereinafter.

The examples that follow will further illustrate the assessing of hair damage utilizing the hair volume measuring device of the present invention.

Example 1

The volumes of virgin hair samples, obtained from well mixed commercial sources, were measured with the device of the present invention having the following dimensions:

| | |
|---|---|
| slot depth: | 3,175 mm (0,125″) |
| slot width: | 1,143 mm (0,045″) |
| slot length: | 25,400 mm (1,000″) |
| compression element height: | 1,397 mm (0,055″) |
| compression element width: | 0,965 mm (0,038″) |

A feeler gauge was used to measure gap distance between male and female members of the block. Then the actual weights of the samples were taken on an analytical balance.

Results are shown in Table I.

### TABLE I
### Virgin hair
### Hair weight, mg

| Gauge No. | Actual | Calculated* |
|---|---|---|
| 4 | 44.3 | 40.1 |
| 4 | 37.9 | 40.1 |
| 4 | 37.7 | 40.1 |
| 4 | 40.5 | 40.1 |
| 4 | 40.7 | 40.1 |
| 5 | 39.3 | 41.8 |
| 5 | 44.1 | 41.8 |
| 7 | 45.5 | 45.1 |
| 7 | 42.0 | 45.1 |
| 7 | 46.8 | 45.1 |
| 8 | 46.0 | 46.6 |
| 8 | 49.0 | 46.6 |
| 8 | 45.5 | 46.6 |
| 9 | 45.6 | 47.9 |
| 9 | 47.3 | 47.9 |
| 10 | 44.8 | 49.2 |
| 11 | 53.5 | 50.4 |
| 11 | 49.7 | 50.4 |
| 12 | 50.9 | 51.5 |
| 17 | 53.5 | 55.5 |
| 18 | 55.3 | 56.0 |
| 23 | 55.7 | 57.1 |
| 24 | 58.8 | 57.0 |
| 25 | 57.3 | 56.8 |

* From the line of best fit
Weight=32.0+2.21 (Gauge)—.0487 $(Gauge)^2$    % Error: 3.8±2.6%

Example 2

The volumes of double bleached hair samples, obtained from well-mixed commercial sources, were measured with the hair volume measuring device of the present invention having the following dimensions:

| | |
|---|---|
| slot depth: | 3,175 mm (0,125″) |
| slot width: | 1,143 mm (0,045″) |
| slot length: | 25,400 mm (1,000″) |
| compression element height: | 1,397 mm (0,055″) |
| compression element width: | 0,965 mm (0,038″) |

A feeler gauge was used to measure gap distance between male and female members of the block. Subsequently, the actual weights of the samples were taken on an analytical balance. Results are shown in Table II.

### TABLE II
### Double bleached hair
### Hair weight, mg

| Gauge No. | Actual | Calculated* |
|---|---|---|
| 5 | 44.1 | 41.8 |
| 6 | 46.6 | 43.5 |
| 7 | 44.6 | 45.1 |
| 9 | 49.9 | 47.9 |
| 10 | 49.7 | 49.2 |
| 11 | 51.2 | 49.2 |
| 12 | 52.5 | 51.5 |
| 15 | 54.9 | 52.2 |
| 23 | 58.8 | 57.1 |

* From the line of best fit
Weight=32.0+2.21 (Gauge)—.0487 $(Gauge)^2$    % Error: 3.2±2.0%

Example 3

The volumes of hair samples, taken from 20 different subjects were measured with the device of the present invention having the following dimensions:

| | |
|---|---|
| slot depth: | 3,810 (0,150") |
| slot width: | 1,397 mm (0,055") |
| slot length: | 12,700 mm (0,500") |
| compression element height: | 1,473 mm (0,058") |
| compression element width: | 1,092 mm (0,043") |

A feeler gauge was used to measure gap distance between male and female members of the block. Subsequently, the actual weight of samples were taken on an analytical balance. Results, including percent error as weight difference between calculated and measured weights, are shown in Table III.

TABLE III
Caucasian hair

| | Hair weight[1] mg | | |
|---|---|---|---|
| Feeler gauge No. | Found | Calculated | Error % |
| 5 | 35.0 | 36.4 | 3.8 |
| 5 | 36.1 | " | 0.8 |
| 5 | 34.6 | " | 4.9 |
| 5 | 38.0 | " | 4.4 |
| 6 | 39.0 | 37.1 | 5.1 |
| 6 | 36.4 | " | 1.9 |
| 10 | 40.1 | 40.0 | 0.3 |
| 10 | 40.6 | " | 1.5 |
| 12 | 40.0 | 41.4 | 3.4 |
| 14 | 45.6 | 42.9 | 6.3 |
| 14 | 42.3 | " | 1.4 |
| 14 | 42.6 | " | 0.7 |
| 15 | 43.8 | 43.6 | 0.5 |
| 15 | 42.1 | " | 3.4 |
| 15 | 43.4 | " | 0.5 |
| 16 | 45.3 | 44.3 | 2.3 |
| 16 | 41.7 | " | 5.9 |
| 16 | 44.5 | " | 0.5 |
| 16 | 43.4 | " | 2.0 |
| 17 | 48.3 | 45.0 | 7.3 |
| 18 | 47.6 | 45.8 | 3.9 |
| 28 | 51.5 | 52.9 | 2.6 |
| | | | X̄=2.6 |

[1] From the relationship: Weight=.719 Gauge+32.8

Example 4

The volumes of hair samples were measured with the device of the present invention having the following dimensions:

| | |
|---|---|
| slot depth: | 2,540 mm (0,100") |
| slot width: | 1,143 mm (0,045") |
| slot length: | 25,400 mm (1,000") |
| compression element height: | 1,397 mm (0,055") |
| compression element width: | 0,965 mm (0,038") |

A taper gauge was used to measure gap distance between male and female members of the block. The actual weight of samples were taken on an analytical balance. Results, including percent error as weight difference between calculated and measured weights, are shown in Table IV.

# EP 0 148 994 B1

### TABLE IV
#### Hair

| Tape gauge No. | Found | Hair weight[1] mg | |
| | | Calculate | Error % |
|---|---|---|---|
| 103 | 48.1 | 48.4 | 0.6 |
| 105 | 50.8 | 40.3 | 0.9 |
| 106 | 51.5 | 51.3 | 0.4 |
| 106 | 52.4 | 51.3 | 2.1 |
| 111 | 57.5 | 56.2 | 2.3 |
| 113 | 57.0 | 58.1 | 1.9 |
| 114 | 57.7 | 59.1 | 2.4 |
| 120 | 64.2 | 64.9 | 1.0 |
| 122 | 68.9 | 66.8 | 3.0 |
| 123 | 62.7 | 67.8 | 8.1 |
| 125 | 70.8 | 69.7 | 1.5 |
| 129 | 76.0 | 73.6 | 3.1 |
| 130 | 74.6 | 74.6 | 0.0 |
| | | | X=0.9 |

[1] From line of best fit: Weight=0.970 Gauge—51.5

The above-shown data illustrate that the hair volume measuring device of the present invention is well suited for obtaining the weight of a small sample based on the measurement of the volume of the sample. It is to be noted that, in addition to measuring the gap between the male and female members of the block by the use of a feeler gauge or taper gauge, other methods or devices could be used as well, such as an optical micrometer. Also, in addition to utilizing the device in connection with hair sample measurements, the same may be utilized with other fibrous materials both natural and synthetic.

Upon obtaining the volume of a hair sample, its weight is calculated and the sample is placed into a vial, such as an optically clear 3,7 ml (1/8 oz.) screw capped bottle containing a copper solution of known or previously measured color intensity. Generally a non-volatile copper solution having $Cu^{++}$ ions stabilized with a complexing agent which complexes with the $Cu^{++}$, having a pH of about 9.0 to 9.5 is used in the practice of the present invention. The following formula is illustrative of formulations contemplated by the present invention.

| | |
|---|---|
| Sodium Tetraborate—10 $H_2O$ (buffer agent) | 3.81 g |
| Copper Sulfate—5 $H_2O$ | 3.90 g |
| Ethanolamine (complexing agent) | 3.99 g |
| Purified $H_2O$ | qs to 1000 ml |
| pH | 9.2 |

The complexing agent renders the solution stable for extended time periods. Illustrative of stability in the following data obtained on aging of the above-shown copper sulfate formula containing ethanolamine therein as the complexing agent.

### TABLE V
Aging of the copper sulfate/ethanolamine—solution (fresh solution=100%)

| Time | % Stability | | |
| | Room Temp. | 40°C | 50°C |
|---|---|---|---|
| 1 year | 97.5% | 96.7% | 95.1% |
| 2 years | 95.1% | 93.4% | 90.9% |

The capped vial, containing the copper solution and hair sample is shaken, then heated for about a minute in boiling water to obtain a reaction between the copper reagent and negatively charged groups in the hair. The solution is then decanted into a cuvette and the color intensity measured. Color intensity measurement may be made by several methods including the following:

(a). Color Chart Method in which the color of the decanted solution is matched with color strips of varying intensities on a color chart. Corresponding to the color intensity of the strips are numbers denoting extent of hair damage.

7

(b). Color Tubes Method in which the color strips of the color chart method are replaced by sealed color tubes containing various concentrations of copper ions and the hair damage is estimated similarly as in (a).

(c). Glass Slides Method in which comparison of color intensity of the sample vial is made with colored glass slides.

(d). Electronic Optical Measurement methods instrumentally measuring color intensity such as, filter photometers and spectrophotometers.

Alternatively to measuring copper concentration by measuring color intensity, the same can be measured by impedance measurement, in which the concentration of copper in solution is measured via the inverse relationship of concentration to impedance.

Hair damage measurements were made utilizing the copper uptake method hereinbefore described and comparing the results obtained thereby with that the Instron Stress/Strain Apparatus method. Hair damage measurement by the Instron Stress/Strain Apparatus is based on the force required to produce an elongation of 15% in hair length which force decreases with increasing hair damage.

Example 5

Virgin hair samples were exposed to alkaline solution for varying length of time then washed free of alkali. Instron Stress/Strain and copper uptake measurements were made on the samples. Results are shown in Table VI.

TABLE VI

| Relative force required to produce 15% elongation | Increase in copper uptake, mg/g hair |
|---|---|
| 100 | 0.0 |
| 96.36 | 4.44 |
| 89.86 | 5.92 |
| 89.77 | 7.44 |
| 75.56 | 13.99 |
| 77.26 | 14.50 |

Example 6

Virgin hair samples were treated with thioglycolate for varying time periods followed by treatment with bromate simulating a typical hair waving treatment. The hair samples were then washed free of residual materials. Instron Stress/Strain and copper uptake measurements were made on the samples. Results are shown in Table VII.

TABLE VII

| Relative force required to produce 15% elongation | Increase in copper uptake, mg/g hair |
|---|---|
| 100.00 | 0.00 |
| 94.44 | 0.48 |
| 82.35 | 5.84 |
| 82.19 | 6.57 |
| 78.27 | 7.38 |
| 69.93 | 7.78 |
| 69.20 | 8.11 |

Example 7

Virgin hair samples were treated with the typical bleaching agents, hydrogen peroxide and potassium persulfate for varying lengths of time. Subsequent to treatment, the samples were washed free of residuals. Instron Stress/Strain and copper uptake measurements were made on the samples. Results are shown in Table VIII.

TABLE VIII

| Relative force required to produce 15% elongation | Increase in copper uptake mg/g hair |
|---|---|
| 100.00 | 0.00 |
| 99.05 | 1.54 |
| 91.12 | 6.03 |
| 83.12 | 11.05 |

As can be ascertained from Tables VI—VIII, there exists a good correlation between results obtained by physical stress/strain measurement and that obtained by the copper uptake method of the present invention.

It will be understood that the preceding examples have been given for illustration purposes only and that this invention is not limited to the specific embodiments disclosed therein. It will also be readily apparent to those skilled in the art that many variations can be made of the hair volume measuring device as well as the method of measuring hair damage by the copper uptake method, within the limits set forth without departing from the spirit and scope of the invention.

**Claims**

1. An apparatus for measuring the approximate volume of a sample of fibrous material of a predetermined length, characterized by

a) a multi-sided male member (12), one of said sides having an elongated rectangular projection (14) extending therefrom, a measuring slot (28) on the same side as said projection (14), and extending parallel and in spaced relationship with said projection (14),

b) a multi-sided female member (16), one of said sides having an elongated rectangular sample slot (18) of a known width and of the same known length as the rectangular projection (14) for holding said sample (20) of fibrous material and for engaging said rectangular projection (14), so that upon measuring the volume of said sample (20) of fibrous material said sample slot (18) and projection (14) are flush against each other in a mateable engagement while the side of said male member (12) having the rectangular projection (14) thereon and the side of said female member (16) having the rectangular sample slot (18) therein face each other in a superimposed spaced relationship, wherein the predetermined length of said sample (20) of fibrous material corresponds to the length of said sample slot (18),

c) and a measuring means (30) to measure the gap between the bottom of said measuring slot (28) and the corresponding surface of said male member (12) to thereby calculate the sample volume.

2. An apparatus according to claim 1, characterized in that said female member (16) further includes a pair of parallel rods (32) and said male member (12) further comprises a pair of parallel receiving members (34) for engagement with said pair of parallel rods.

3. An apparatus according to any one of the preceding claims, characterized in that said male (12) and female members (16) are each formed of metal.

4. An apparatus according to claim 1 or 2, characterized in that said male (12) and female members (16) are each formed of a metal alloy.

5. An apparatus according to claim 1 or 2, characterized in that said male (12) and female members (16) are each formed of a material selected from the group consisting of plastic, porcelain, wood and glass.

6. An apparatus according to any one of the preceding claims, characterized in that said fibrous material (20) is hair.

7. A method of measuring the approximate volume of a sample of fibrous material of a predetermined length, characterized in that said method comprises the steps of placing said sample into a sample receiving slot having predetermined dimensions of length and width, compressing said sample, measuring the height of said sample, cutting off both ends of said sample to obtain a length which corresponds with the length of said sample receiving slot, and determining the volume of the sample from the known dimensions of length, width and height thereof.

8. The method according to claim 7, characterized in that compressing of said sample includes placing a male member having a projection thereon on a female member having said sample receiving slot therein, and pressing said members together.

9. The method according to claim 7 or 8, characterized by measuring the height of said sample with a taper gauge.

10. The method according to claim 7 or 8, characterized by measuring the height of said sample with a feeler gauge.

11. The method according to any one of claims 7 to 10, characterized in that said fibrous material is hair.

12. A method of measuring hair damage of a sample of hair of a predetermined length based on copper reaction with active negative sites on hair, characterized in what said method comprises the steps of

a) measuring the volume of the sample of hair by one of the methods of claims 7 to 11,

b) placing the sample of hair into a sealed vial containing a water solution of a known amount of copper sulfate having $Cu^{++}$ ions that is stabilized with the complexing agent ethanolamine and buffered with sodium tetraborate, said solution having a pH of about 9.0 to 9.5,

c) reacting said solution with said hair by heating the vial,

d) determining the copper uptake by the hair.

13. The method of claim 12, characterized in that said copper uptake determination is by impedance measurement of the copper solution decanted from the vial.

14. A method of measuring hair damage of a sample of hair of a predetermined length based on copper reaction with active negative sites on hair, characterized in that said method comprises the steps of

a) measuring the volume of the sample of hair by one of the methods of claims 7 to 11,

b) placing the sample of hair into a sealed optically clear vial containing a water solution of a known amount of copper sulfate having $Cu^{++}$ ions that is stabilized with the complexing agent ethanolamine and buffered with sodium tetraborate, said solution having a pH of about 9.0 to 9.5,

c) reacting said solution with said hair by heating the vial and decanting the residual solution for measuring its color intensity, and

d) determining the copper uptake by the hair by comparing the intensity of the decanted solution with color intensities of media which denote amounts of copper concentration.

15. The method of claim 14, characterized in that said media is a color chart.

16. The method of claim 14, characterized in that said media is color tubes containing various concentrations of copper.

17. The method of claim 14, characterized in that said media is colored glass slides.

18. The method of claim 14, characterized in that said comparing of color intensities of the copper solution and media having various color intensities is by electronic measurement.

19. The method of claim 18, characterized in that said electronic measurement is by a filter photometer.

20. The method of claim 18, characterized in that said electronic measurement is by a spectrophotometer.

**Patentansprüche**

1. Einrichtung zur Bestimmung des approximativen Volumens einer Probe aus Fasermaterial mit festgelegter Länge, gekennzeichnet durch

a) ein mehrseitiges Patrizenbauglied (12) mit einem rechteckigen länglichen Vorsprung (14) auf einer seiner Seiten und einem auf derselben Seite wie der Vorsprung (14) angeordneten Meßschlitz (28), der sich parallel und in Abstandsrelation zu dem Vorsprung (14) erstreckt.

b) ein mehrseitiges Matrizenbauglied (16), von dem eine seiner Seiten einen rechteckigen länglichen Probenschlitz (18) mit einer bekannten Weite und von derselben bekannten Länge wie der rechteckige Vorsprung (14) zur Aufnahme der Probe (20) des Fasermaterials und Einrückung des länglichen Vorsprungs (14) aufweist, so daß beim Bestimmen des Volumens der Probe (20) des Fasermaterials der Probenschlitz (18) und der Vorsprung (14) gegeneinander abschließen in einem zugehörigen Eingriff während die Seite des Patrizenbauglieds (12) mit dem rechteckigen Vorsprung (14) und die Seite des Matrizenbauglieds mit dem rechteckigen Probenschlitz (18) einander berühren in einer übereinanderliegenden Abstandsrelation, wobei die festgelegte Länge der Probe (20) des Fasermaterials mit der Länge des Probenschlitzes (18) übereinstimmt, und

c) ein Meßwerkzeug (30) zur Bestimmung des Zwischenraums zwischen dem Boden des Meßschlitzes (28) und der korrespondierenden Oberfläche des Patrizenbauglieds (12) zur Berechnung des Volumens der Probe.

2. Einrichtung gemäß Anspruch 1, dadurch gekennzeichnet, daß das Matrizenbauglied (16) ferner aufweist ein Paar von parallelen Stäben (32) und das Patrizenbauglied ferner umfaßt ein Paar von parallelen Aufnahmeteilen (34) zum Eingriff von dem Paar der parallelen Stäbe.

3. Einrichtung gemäß einem jeden der vorangehenden Ansprüche, dadurch gekennzeichnet, daß das Patrizenbauglied (12) und das Matrizenbauglied (16) jeweils aus Metall geformt sind.

4. Einrichtung gemäß Anspruch 1 oder 2, dadurch gekennzeichnet, daß das Patrizenbauglied (12) und das Matrizenbauglied (16) jeweils aus einer Metallegierung geformt sind.

5. Einrichtung gemäß Anspruch 1 oder 2, dadurch gekennzeichnet, daß das Patrizenbauglied (12) und das Matrizenbauglied (16) jeweils aus einem Material geformt sind, das aus der von Plastikmassen, Porzellan, Holz und Glas gebildeten Gruppe ausgewählt ist.

6. Einrichtung gemäß einem jeden der vorangehenden Ansprüche, dadurch gekennzeichnet, daß das Fasermaterial (20) Haar ist.

7. Verfahren zur Bestimmung des approximativen Volumens von einer Probe eines Fasermaterials von festgelegter Länge, dadurch gekennzeichnet, daß dieses die Stufen des Einbringens einer Probe in einen Probenaufnahmeschlitz mit festgelegter Länge und Weite, Zusammendrücken der Probe, Messen der Höhe der Probe, Abschneiden der beiden Enden der Probe zum Erhalt einer Länge, die mit der Länge des Probenaufnahmeschlitzesübereinstimmt und Ermittelung des Volumens der Probe aus den bekannten Dimensionen der Länge, Weite und Höhe umfaßt.

8. Verfahren gemäß Anspruch 7, dadurch gekennzeichnet, daß das Zusammenpressen der Probe das Postieren eines Patrizenbauglieds mit einem darauf befindlichen Vorsprung auf ein Matrizenbauglied mit einem Probenaufnahmeschlitz und das Pressen der Glieder aufeinander umfaßt.

9. Verfahren gemäß Anspruch 7 oder 8, gekennzeichnet durch das Bestimmen der Höhe von der Probe mittels einer sich verjüngenden Lehre.

10. Verfahren gemäß Anspruch 7 oder 8, gekennzeichnet durch das Bestimmen der Höhe von der Probe mittels einer Fühlerlehre.

11. Verfahren gemäß einem jeden der Ansprüche 1 bis 10, dadurch gekennzeichnet, daß das Fasermaterial Haar ist.

12. Verfahren zur Bestimmung der Haarschädigung von einer Probe des Haares von festgelegter Länge, basierend auf der Kupferreaktion mit aktiven negativen Stellen vom Haar, dadurch gekennzeichnet, daß das Verfahren die folgenden Stufen umfaßt:

a) Bestimmen des Volumens von der Haarprobe mittels einer der Methoden gemäß Ansprüchen 7 bis 11,

b) Plazieren der Haarprobe in eine verschlossene Ampulle, die eine wässerige Lösung mit einem bekannten Gehalt an Kupfersulfat mit $Cu^{++}$-Ionen aufweist, die mit Ethanolamin als Komplexierungsmittel stabilisiert und mit Natriumtetraborat gepuffert ist, so daß der pH-Wert zwischen 9,0 und 9,5 liegt,

c) Einwirkenlassen der Lösung auf das Haar durch Erhitzen der Ampulle und

d) Ermittlung der Kupferaufnahme durch das Haar.

13. Verfahren gemäß Anspruch 12, dadurch gekennzeichnet, daß die Kupferaufnahme ermittelt wird durch Impedanzmessung der aus der Ampulle abgezogenen Kupferlösung.

14. Verfahren zur Bestimmung der Haarschädigung von einer Probe des Haares von festgelegter Länge, basierend auf der Kupferreaktion mit aktiven negativen Stellen vom Haar, dadurch gekennzeichnet, daß das Verfahren die folgenden Stufen umfaßt:

a) Bestimmen des Volumens von von der Haarprobe mittels einer der Methoden der Ansprüche 7 bis 11,

b) Plazieren der Haarprobe in eine verschlossene, optisch klare Ampulle, die eine wässerige Lösung mit einem bekannten Gehalt an Kupfersulfat mit $Cu^{++}$-Ionen aufweist, die mit Ethanolamin als Komplexierungsmittel stabilisiert und mit Natriumborat gepuffert ist, so daß der pH-Wert zwischen 9,0 und 9,5 liegt,

c) Einwirkenlassen der Lösung auf das Haar durch Erhitzen der Ampulle und Abziehen der restlichen Lösung zum Messen der Farbintensität und

d) Ermittelung der Kupferaufnahme durch das Haar durch Vergleich der Intensität der abgezogenen Lösung mit Farbintensitäten von Medien, die die Kupferkonzentration anzeigen.

15. Verfahren gemäß Anspruch 14, dadurch gekennzeichnet, daß die Medien aus einer Farbenkarte bestehen.

16. Verfahren gemäß Anspruch 14, dadurch gekennzeichnet, daß die Medien aus Farbentuben mit einem Gehalt an verschiedenen Kupferkonzentrationen bestehen.

17. Verfahren gemäß Anspruch 14, dadurch gekennzeichnet, daß die Medien aus gefärbten Objektträgern bestehen.

18. Verfahren gemäß Anspruch 14, dadurch gekennzeichnet, daß der Vergleich der Farbintensitäten der Kupferlösung und der Medien mit verschiedenen Farbintensitäten durch eine elektronische Ermittlung erfolgt.

19. Verfahren gemäß Anspruch 18, dadurch gekennzeichnet, daß die elektronische Ermittlung durch ein Filterphotometer erfolgt.

20. Verfahren gemäß Anspruch 18, dadurch gekennzeichnet, daß die elektronische Ermittlung mittels eines Spektrophotometers erfolgt.

**Revendications**

1. Appareil pour mesurer le volume approximatif d'un échantillon de matière fibreuse d'une longueur prédéterminée, caractérisé par:

a) un élément mâle (12) à faces multiples, l'une desdites faces présentant une protubérance rectangulaire (14) de forme allongée qui fait saillie sur cette face, une fente de mesure (28) située sur la même face que ladite protubérance (14) et qui s'étend parallèlement à ladite protubérance (14) et à un certain écartement de celle-ci;

b) un élément femelle à faces multiples (16), l'une desdites faces présentant une fente à échantillon (18) rectangulaire de forme allongée, de largeur connue et de la même longueur connue que la protubérance rectangulaire (14), destinée à retenir ledit échantillon (20) de matière fibreuse et à coopérer avec ladite protubérance rectangulaire (14) de telle manière que, lorsqu'on mesure le volume dudit échantillon (20) de matière fibreuse, ladite fente à échantillon (18) et ladite protubérance (14) sont en coïncidence enter elles dans une position d'accouplement, tandis que la face dudit élément mâle (12) qui porte la protubérance rectangulaire (14) et la face dudit élément femelle (16) qui présente la fente à échantillon rectangulaire (18) se font mutuellement face, dans des positions espacées et superposées, la longueur prédéterminée dudit échantillon de matière fibreuse (20) correspondant à la longueur de ladite fente à échantillon (18);

11

c) et des moyens de mesure (30) permettant de mesurer l'intervalle entre le fond de ladite fente de mesure (28) et la surface correspondante dudit élément mâle (12) pour calculer de cette façon le volume de l'échantillon.

2. Appareil selon la revendication 1, caractérisé en ce que ledit élément femelle (16) comprend en outre une paire de broches parallèles (32) et ledit élément mâle (12) comprend en outre deux logements récepteurs parallèles (34) destinés à coopérer avec ladite paire de broches parallèles.

3. Appareil selon l'une quelconque des revendications précédentes, caractérisé en ce que lesdits éléments mâle (12) et femelle (16) sont tous deux formés de métal.

4. Appareil selon la revendication 1 ou 2, caractérisé en ce que lesdits éléments mâle (12) et femelle (16) sont tous deux formés d'un alliage métallique.

5. Appareil selon la revendication 1 ou 2, caractérisé en ce que lesdits éléments mâle (12) et femelle (16) sont tous deux formés d'une matière choisie dans le groupe comprenant les matières plastiques, la porcelaine, le bois et le verre.

6. Appareil selon l'une quelconque des revendications précédentes, caractérisé en ce que ladite matière fibreuse (20) est constituée par des cheveux.

7. Procédé pour mesurer le volume approximatif d'un échantillon d'une matière fibreuse prédéterminée, caractérisée en ce que ledit procédé comprend les phases consistant à: placer ledit échantillon dans une fente réceptrice d'échantillons possédant des dimensions prédéterminées en longueur et en largeur, comprimer ledit échantillon, mesurer la hauteur dudit échantillon, couper les deux extrémités dudit échantillon pour obtenir une longueur qui correspond à la longueur de ladite fente réceptrice d'échantillons, et déterminer le volume de l'échantillon à partir de ses dimensions connues en longueur, largeur et hauteur.

8. Procédé selon la revendication 7, caractérisé en ce que la compression dudit échantillon consiste à placer un élément mâle portant une protubérance sur l'élément femelle présentant ladite fente réceptrice de l'échantillon et à presser lesdits éléments l'un contre l'autre.

9. Procédé selon la revendication 7 ou 8, caractérisé en ce qu'on mesure la hauteur dudit échantillon au moyen d'une jauge à coin.

10. Procédé selon la revendication 7 ou 8, caractérisé en ce qu'on mesure la hauteur dudit échantillon avec une cale calibrée.

11. Procédé selon l'une quelconque des revendications 7 à 10, caractérisé en ce que ladite matière fibreuse est constituée par des cheveux.

12. Procédé pour mesurer la détérioration des cheveux d'un échantillon de cheveux d'une longueur prédéterminée, basé sur la réaction du cuivre avec les sites actifs négatifs des cheveux, caractérisé en ce que ledit procédé comprend les phases consistant à:

a) mesurer le volume de l'échantillon de cheveux par l'un des procédés des revendications 7 à 11;

b) placer l'échantillon de cheveux dans une folie bouchée contenant une solution aqueuse d'une quantité connue de sulfate de cuivre contenant des ions $Cu^{++}$ qui est stabilisée avec l'agent complexant éthanolamine et tamponnée avec du tétraborate de sodium, ladite solution ayant un pH d'environ 9,0 à 9,5;

c) faire réagir ladite solution avec lesdits cheveux en chauffant la fiole, et

d) déterminer l'absorption de cuivre par les cheveux.

13. Procédé selon la revendication 12, caractérisé en ce que l'absorption de cuivre s'effectue par mesure de l'impédance de la solution de cuivre décantée de la fiole.

14. Procédé de mesure de la détérioration d'un échantillon de cheveux d'une longueur prédéterminée, basée sur les réactions du cuivre avec des sites négatifs actifs des cheveux, caractérisé en ce que ledit procédé comprend les phases consistant à:

a) mesurer le volume de l'échantillon de cheveux par l'un des procédés des revendications 7 à 11;

b) placer l'échantillon de cheveux dans une fiole optiquement limpide, bouchée, contenant une solution aqueuse d'une quantité connue de sulfate de cuivre contenant des ions $Cu^{++}$ qui est stabilisée avec l'agent complexant éthanolamine et tamponnée avec du tétraborate de sodium, ladite solution ayant un pH d'environ 9,0 à 9,5;

c) faire réagir ladite solution avec lesdits cheveux en chauffant la fiole et en décantant la solution résiduelle pour mesurer son intensité de coloration, et

d) déterminer l'absorption du cuivre par les cheveux en comparant l'intensité de la solution décantée avec des intensités de couleur de milieux qui indiquent les quantités de concentration du cuivre.

15. Procédé selon la revendication 14, caractérisé en ce que lesdits milieux sont constitués par une carte de couleurs.

16. Procédé selon la revendication 14, caractérisé en ce que lesdits milieux sont des tubes de couleurs contenant différentes concentrations de cuivre.

17. Procédé selon la revendication 14, caractérisé en ce que lesdits milieux sont des lames de verre colorées.

18. Procédé selon la revendication 14, caractérisé en ce que la comparaison des intensités de couleurs de la solution de cuivre et des milieux possédant différentes intensités de couleurs s'effectue par une mesure électronique.

19. Procédé selon la revendication 18, caractérisé en ce que ladite mesure électronique est exécutée par un photomètre à filtres.

20. Procédé selon la revendication 18, caractérisé en ce que ladite mesure électronique est exécutée par un spectrophotomètre.

EP 0 148 994 B1

Fig.1.

Fig.2.

Fig.3.

Fig.4.

Fig.5.

1

Fig.6.

Fig.7.

Fig.8.

Fig.9.